Europäisches Patentamt

European Patent Office

Office européen des brevets

(11) Numéro de publication: **0 273 802 B1**

(19)

(12) **FASCICULE DE BREVET EUROPEEN**

(45) Date de publication de fascicule du brevet: **19.02.92**   (51) Int. Cl.⁵: **G06F 7/22**

(21) Numéro de dépôt: **87402710.5**

(22) Date de dépôt: **01.12.87**

(54) **Filtre numérique de rang K, et procédé de filtrage correspondant.**

(30) Priorité: **02.12.86 FR 8616804**

(43) Date de publication de la demande:
**06.07.88 Bulletin  88/27**

(45) Mention de la délivrance du brevet:
**19.02.92 Bulletin  92/08**

(84) Etats contractants désignés:
**DE FR GB IT NL**

(56) Documents cités:

**ICASSP 85 PROCEEDINGS OF THE IEEE INTERNATIONAL CONFERENCE ON ACOUSTICS, SPEECH AND SIGNAL PROCESSING, Tampa, Florida, 26-29 mars 1985, vol. 4, pages 1519-1522, IEEE, New York, US; J.A. ROSKIND: "A fast sort-selection filter chip with effectively linear hardware complexity"**

**DIGITAL PROCESSES, vol. 6, no. 2,3, 1980, pages 207-210, Georgi Publishing Co., St. Saphorin, CH; C.K. YUEN: "A bit-serial device for extracting a vector element of a specified rank"**

**COMPUTER GRAPHICS AND IMAGE PROCESSING, vol. 17, no. 1, septembre 1981, pages**

**71-78, Academic press, Inc., New York, US; P.-E. DANIELSSON: "Getting the median faster"**

(73) Titulaire: **SGS-THOMSON MICROELECTRONICS S.A.**
**101 Boulevard Murat**
**F-75016 Paris(FR)**

(72) Inventeur: **Artieri, Alain**
**THOMSON-CSF SCPI 19, avenue de Messine**
**F-75008 Paris(FR)**
Inventeur: **Bergher, Laurent**
**THOMSON-CSF SCPI 19, avenue de Messine**
**F-75008 Paris(FR)**
Inventeur: **Ouetier, Eric**
**THOMSON-CSF SCPI 19, avenue de Messine**
**F-75008 Paris(FR)**

(74) Mandataire: **de Beaumont, Michel**
**1bis, rue Champollion**
**F-38000 Grenoble(FR)**

EP 0 273 802 B1

## Description

La présente invention concerne le filtrage numérique, c'est à dire le filtrage de signaux électriques arrivant en principe sous forme binaire, sans conversion de ces signaux en signaux analogiques.

Les filtres numériques sont utilisés par exemple pour le traitement de la parole ou le traitement des images.

Diverses fonctions de filtrage sont couramment utilisées dans ces applications, et notamment des fonctions de lissage consistant à remplacer une valeur numérique déterminée par une fonction des valeurs numériques les plus voisines (dans le temps ou dans l'espace) de cette valeur.

Dans l'example du filtrage de signaux numériques représentant les points d'une image (luminance, ou chrominance ou tout autre paramètre relatif à chaque point), on peut par exemple utiliser comme fonction de lissage le remplacement d'une valeur représentant un point d'image par la valeur moyenne des 9 ou 25 ou 49 points d'image d'un bloc matriciel de points centré autour de ce point.

Ce type de filtrage élimine les points aberrants dus au bruit, mais il dégrade les contours de l'image.

Le filtrage dit "médian" est un autre type de filtrage destiné à éliminer des points aberrants et qui a l'avantage de moins dégrader les contours.

Le filtrage médian consiste à prendre l'ensemble des valeurs d'une fenêtre de n points (n impair), à les trier en ordre croissant ou décroissant, et à remplacer le point central de la fenêtre par la valeur médiane de la suite ordonnée. On rappelle que la vaeur médiane est celle qui est au milieu de la suite, c'est-à-dire qu'il y a autant de points au dessous que de points au dessus de cette valeur.

Plus généralement, le filtrage de rang k consiste à remplacer le point central de cette fenêtre par la $k^{ième}$ valeur de la suite ordonnée. Le filtrage de rang k inclus le filtrage médian, avec k = (n + 1)/2, ainsi que le filtrage de minimum (k = 1), et le filtrage de maximum (k = n), mais bien entendu k peut être quelconque.

La présente invention s'intéresse généralement aux filtres de rang k.

La difficulté est de faire un filtrage en temps réel à une cadence élevée.

Pour le traitement d'images de télévision, les points peuvent arriver à la cadence d'un point toutes les 70 nanosecondes. Il y a 512x512 points par image.

Il faut que le filtre puisse fournir des points corrigés à la même cadence.

On a envisagé, comme on le fait souvent pour le filtrage numérique, que le filtrage soit fait par un logiciel de traitement spécialisé. Un ordinateur, ou plus simplement un microprocesseur spécialisé, serait piloté par un logiciel de traitement numérique exécutant un algorithme de filtrage de rang k ; il recevrait les valeurs successives des points d'image et restituerait en temps réel des valeurs corrigées.

Mais l'algorithme consiste à faire d'abord un tri pour ordonner une suite de n valeurs et les mettre en ordre croissant ou décroissant. Il est classique d'envisager qu'un tri de n éléments nécessite nlogn opérations. Pour le traitement d'images, n est au minimum égal à 9, et de préférence égal à 25 ou 49. Il est très difficile d'exécuter en 74 nanosecondes le nombre d'opérations qui est nécessaire pour faire ce tri.

On a donc aussi proposé, comme cela est décrit dans "ICASSP 85 Proceedings of the International Conference On Acoustics, Speech and Signal Processing", vol. 4, 26-29 Mars 1985, pages 1519 à 1522, de réaliser directement par des circuits électroniques intégrés la fonction de tri, afin qu'elle soit beaucoup plus rapide que le travail exécute instruction par instruction par un processeur. Mais les circuits qui en résultent sont très encombrants, la surface de circuit utilisée croissant comme le carré du nombre n de valeurs à trier.

Enfin, pour résoudre ces difficultés, on a aussi proposé de remplacer le filtrage sur un bloc bidimensionnel de n = mxm points par un filtrage sur chaque ligne de m points suivi d'un filtrage sur les n résultats obtenus: c'est un pseudo-filtrage de rang k. Par exemple, au lieu de déterminer la valeur médiane d'une fenêtre de 9 points, on détermine trois valeurs médianes sur trois points chacune et on prend la médiane des valeurs médianes. Statistiquement, on s'aperçoit que le résultat est proche de la véritable médiane, mais ce n'est par toujours suffisant, et ce n'est pas applicable plus généralement au filtrage de rang k.

Ceci montre bien les difficultés qu'on a rencontré jusqu'à maintenant pour faire du filtrage numérique de rang k en temps réel.

La présente invention propose un procédé de filtrage original selon la revendication 1 et un circuit de filtrage numérique selon la revendications 2, qui permettent de résoudre le problème du filtrage en temps réel d'une manière particulièrement intéressante.

D'autres modes de réalisation du circuit de filtrage numérique sont définis dans les revendications dépendantes 3 à 5.

On expliquera en détail comment ce principe permet de déterminer effectivement quel est la $k^{ième}$ position de la suite ordonnée.

D'autres caractéristiques et avantages de l'invention apparaîtront à la lecture de la description détaillée qui suit et qui est faite en référence aux dessins annexés dans lesquels:

- la figure 1 représente un schéma bloc du mode de réalisation préféré du filtre numérique selon l'invention;

- la figure 2 représente un détail de réalisation d'une cellule de modification de bit du schéma de la figure 1;

- la figure 3 représente un détail de réalisation d'une cellule du circuit d'élaboration des signaux de test destinés à définir les modifications de bit;

- la figure 4 représente un exemple de réalisation du circuit permettant de comparer à un nombre k le nombre de bits égaux à zéro dans une suite de bits.

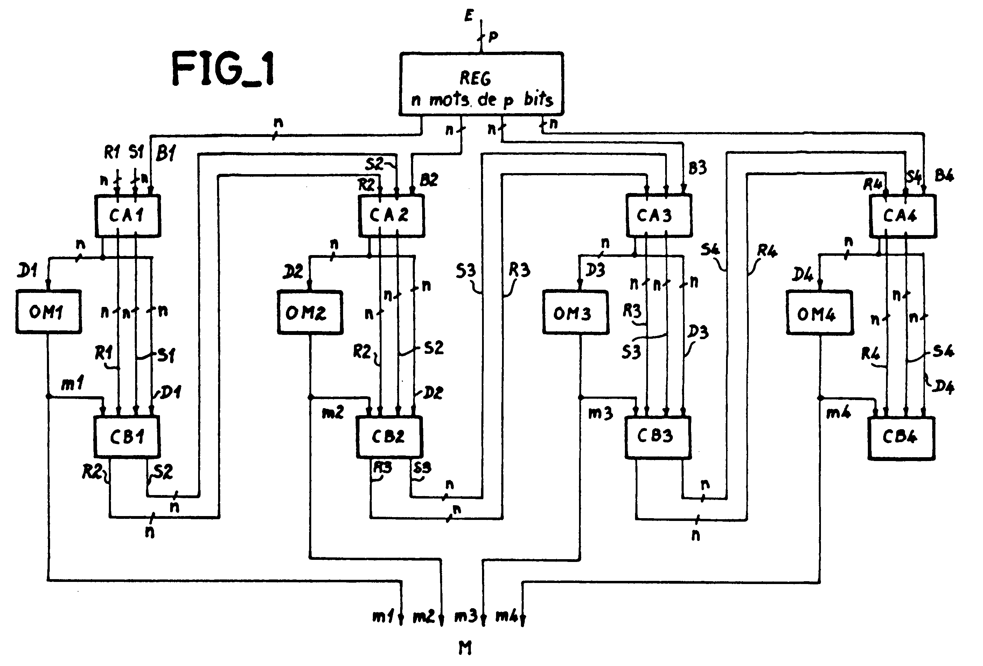

Avant de décrire en détail le circuit de la figure 1 qui constitue le mode de réalisation de celle des valeurs numériques qui est à la $k^{\text{ième}}$ position dans la suite ordonnée de n valeurs numériques. C'est en effet ce procédé qui est à la base de l'invention et qu'il faut comprendre pour comprendre le schéma de la figure 1.

On va partir d'un exemple concret d'une suite de valeurs binaires.

Les valeurs binaires sont au nombre de n; dans l'exemple, n = 9.

Les valeurs sont codées sur p bits; dans l'exemple, p = 4.

Les poids binaires sont décroissants de gauche à droite et si on désigné par j le rang binaire d'un bit quelconque, on précise que j varie de 1 à p en allant du poids le plus élevé vers le poids le plus faible: j croît avec les poids décroissants.

La suite de valeurs numériques choisies à titre d'illustration est donnée ci-dessous, avec les valeurs décimales inscrites entre parenthèses en regard de chaque valeur binaire. On a donné à chaque valeur un nom: A1 à A9, les noms se succédant par exemple en correspondance avec l'ordre quelconque dans lequel les valeurs se sont présentées à l'entrée du filtre, ou encore en correspondance avec les adresses d'un registre dans lequel sont rangées ces valeurs.

Tableau 1

| A1 | 0001 | (1) |
|----|------|-----|
| A2 | 1000 | (8) |
| A3 | 0010 | (2) |
| A4 | 0111 | (7) |
| A5 | 0011 | (3) |
| A6 | 0110 | (6) |
| A7 | 0100 | (4) |
| A8 | 0101 | (5) |
| A9 | 0100 | (4) |

Si on range ces valeurs sous forme d'une suite ordonnée croissante, on obtient l'ordre suivant:

| A1, | A3, | A5, | A7, | A9, | A8, | A6, | A4, | A2 |
|-----|-----|-----|-----|-----|-----|-----|-----|-----|
| 1 | 2 | 3 | 4 | 4 | 5 | 6 | 7 | 8 |

Pour simplifier la description, on recherchera la valeur médiane de cette suite, mais le raisonnement serait le même pour déterminer la valeur qui est à une position k quelconque de cette suite.

On voit que la valeur médiane (c'est à dire la cinquième position puisqu'il y a 9 valeurs) est égale à 4, c'est à dire 0100 en binaire. Le procédé qui va être décrit doit donc aboutir à cette valeur 0100.

On examine les bits de la colonne de gauche du tableau 1, c'est-à-dire les bits de poids le plus élevé; on détermine s'il y en a k ou plus de k à 0; ici k = 5 et la réponse est affirmative.

On en tire deux conséquences:

a) le bit de poids le plus élevé de la valeur cherchée (ici la valeur médiane) sera 0.

b) les valeurs numériques dont le bit de poids le plus élevé est 1 sont nécessairement supérieures ou égales à la valeur médiane et on peut, sans changer la valeur médiane, remplacer ces valeurs par toute valeur supérieure ou égale à la valeur médiane.

On choisit de remplacer ces valeurs par la valeur 0111 qui est nécessairement supérieure ou égale à la valeur médiane (dont on sait qu'elle commence par 0).

3

Autrement dit, dans les valeurs ayant un bit de poids fort égal à 1, on remplace ce bit par 0 et les bits de poids inférieur par des 1. Ici, cela ne concerne que la valeur A2. Il en résulte le tableau modifié suivant.

Tableau 2

| A1 | 0001 |
|----|------|
| A2 | 0111 |
| A3 | 0010 |
| A4 | 0111 |
| A5 | 0011 |
| A6 | 0110 |
| A7 | 0100 |
| A8 | 0101 |
| A9 | 0100 |

La colonne de gauche ne comporte plus que des zéros; elle est devenue inutile pour la détermination de la valeur médiane; on la supprime et on considère le rang immédiatement inférieur comme rang le plus élevé pour recommencer un test identique au précédent.

Il est bien entendu que si le test avait donné un autre résultat (moins de k bits égaux à 0), on aurait effectué un autre traitement. C'est cet autre traitement que l'on va voir ci-dessous à propos du test de la colonne de bits suivante.

Le test de la deuxième colonne (rang $j = 2$) du tableau 2 montre qu'il y a moins de k bits à 0 ($k = 5$).

On en tire les deux conséquences suivantes:

a) le bit de rang $j = 2$ de la valeur cherchée (médiane) est 1.

b) les valeurs du tableau 2 t le bit de rang 2 est 0 sont nécessairement inférieures à la valeur médiane; elles peuvent donc, sans que cela change la valeur médiane, être remplacées par la valeur 0100; en effet, cette valeur est nécessairement inférieure ou égale à la valeur médiane car la valeur médiane a comme deux premiers bits 01.

Plus généralement, si le bit de rang 2 est 0, on le remplace par 1 et on remplace tous les bits de rang inférieur à 2 par des zéros. Ici, cela concerne les valeurs A1, A3, A5.

Il en résulte le tableau suivant de valeurs modifiées:

Tableau 3

| A1 | 0100 |
|----|------|
| A2 | 0111 |
| A3 | 0100 |
| A4 | 0111 |
| A5 | 0100 |
| A6 | 0110 |
| A7 | 0100 |
| A8 | 0101 |
| A9 | 0100 |

Les bits de rang 1 étant tous identiques ainsi que les bits de rang 2, on peut les ignorer dans la poursuite de la recherche de la valeur médiane.

Le même test que précédemment est maintenant effectué sur les bits de la troisième colonne et les mêmes conséquences en sont tirées. Il en résulte d'une part le fait que le troisième bit de la valeur cherchée est ici un 0, et d'autre part un tableau 4 dans lequel les valeurs dont le troisième bit est un 1 ont été remplacées par la valeur 0101 certainement supérieure ou égale à la valeur médiane cherchée.

Tableau 4

| A1 | 0100 |
|----|------|
| A2 | 0101 |
| A3 | 0100 |
| A4 | 0101 |
| A5 | 0100 |
| A6 | 0101 |
| A7 | 0100 |
| A8 | 0101 |
| A9 | 0100 |

Finalement les trois premiers bits du tableau de valeurs modifiées étant tous identiques, il ne reste plus qu'à tester le nombre de bits à 0 dans la dernière colonne. Si ce nombre est supérieur ou égal à k, le dernier bit de la valeur cherchée sera 0. C'est bien le cas ici, et on vérifie donc que les quatre bits de la valeur cherchée sont 0100 comme on l'avait prévu au départ.

Ce procédé est extrêmement simple à mettre en oeuvre à l'aide d'un circuit spécialisé ou d'un circuit nonspécialisé commandé par des instructions (microprocesseur); la séquence des opérations de test et de modification de bits est décrite ci-dessus avec suffisament de détails pour qu'il n'y ait pas de difficultés particulières.

On va cependant décrire une réalisation avec un circuit de logique combinatoire qui a l'avantage d'être plus rapide.

Le schéma est représenté à la figure 1.

Pour stocker les n valeurs numériques dont on veut déterminer la médiane (ou la $k^{ième}$ position), on prévoit un registre de n mots de p bits; il est désigné par REG sur la figure 1. Les valeurs ont été introduites par exemple séquentiellement dans ce registre, mais elles doivent pouvoir en sortir toutes en parallèle. C'est pourquoi l'entrée du registre, qui peut être aussi l'entrée du filtre, est un bus E de p conducteurs, mais la sortie du registre est consituée par p bus de n conducteurs chacun.

Sur la figure 1, on a considéré que p = 4 pour simplifier, et on a donc représenté quatre bus B1, B2, B3, B4 de n bits chacun. Chaque bus correspond à une poids binaire respectif j (j = 1 à j = p dans l'ordre des poids décroissants) de chiffres binaires des n valeurs.

On peut appeler $b_{i,j}$ le bit de poids j de la $i^{ième}$ valeur. Ce bit est transmis par le bus Bj.

Le circuit de détermination de la $k^{ième}$ valeur est un réseau de p groupes de circuits que l'on va détailler ci-après. Il y a un groupe respectif de circuits pour chaque pois binaire des valeurs à traiter.

Chaque groups comprend trois blocs ayant des fonctions distinctes les uns des autres.

Le premier bloc, désigné par CAj pour le poids binaire j (Ca1, CA2, CA3, CA4 sur la figure 1), est constitué par n cellules élémentaires; chaque cellule reçoit un bit $b_{i,j}$, un premier signal de test $S_{i,j}$ et un deuxième signal de test $R_{i,j}$. Elle élabore un bit modifié $d_{i,j}$ ayant pour valeur 1 si $S_{i,j} = 1$, ou 0 si $R_{i,j} = 1$ ou $b_{i,j}$ dans les autres cas.

Le bloc CAj reçoit trois bus d'entrée Bj, Sj, Rj, de n conducteurs chacun, et possède comme sortie un bus Dj de n conducteurs également.

Le deuxième bloc, désigné par OMj pour le rang binaire j, reçoit le bus Dj, et il fournit sur sa sortie un signal logique $m_j$ (1 bit) indiquant s'il y a ou non k ou plus de k bits à 0 sur le bus Dj.

Le troisième bloc, désigné par CBj sur la figure, est constitué par n cellules élémentaires; chaque cellule reçoit le bit $d_{i,j}$ de rang j, le premier signal de test $S_{i,j}$, le second signal de test $R_{i,j}$ et enfin la sortie $m_j$ du bloc OMj, et elle élabore un premier signal de test $S_{i,j+1}$ et un second signal de test $R_{i,j+1}$ pour les blocs du rang binaire suivant j + 1.

Le bloc CBj reçoit donc le bus Dj, le bus Sj, le bus Rj, et le signal $m_j$, et sa sortie constituée par les bus Sj + 1 et Rj + 1.

Le circuit fonctionne donc par élaboration successive des signaux de test correspondant aux poids binaires successifs décroissants. Pour que le fonctionnement soit parfaitement déterminé, on doit imposer les valeurs initiales des signaux de test pour le poids le plus élevé. Ces valeurs sont:

$$S_{i,1} = R_{i,1} = 0$$

La relation logique par laquelle on établit $S_{i,j+1}$ et $T_{i,j+1}$ à partir de $S_{i,j}$ et $R_{i,j}$ est la suivante. L'astérisque * désigne le complément logique d'une valeur binaire:

$$S_{i,j+1} = S_{i,j} + m_j^*.d_{i,j}$$
$$R_{i,j+1} = R_{i,j} + m_j.d_{i,j}^*$$

Les sorties du circuit de filtrage sont les sorties des blocs OMj: la sortie du bloc OMj représente le chiffre binaire de rang j de la valeur médiane ou de la valeur à la $k^{ième}$ position de la suite de n valeurs.

Ces sorties sont regroupées en un bus M de p bits qui fournit la valeur cherchée à la sortie du filtre.

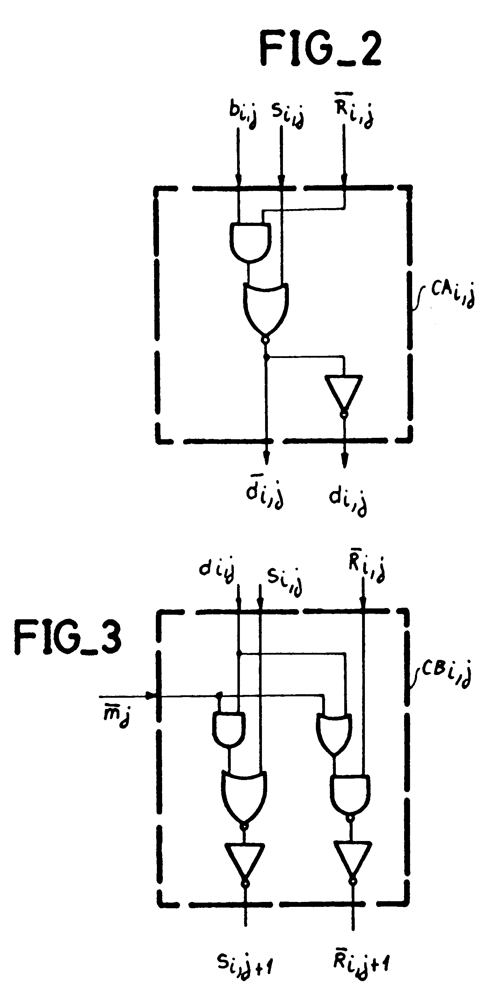

Les schémas des figures 2 et 3 représentent respectivement un exemple de réalisation d'une cellule $CA_{i,j}$ d'un bloc CAj, et une cellule $CB_{i,j}$ d'un bloc CBj. On notera que pour des raisons de simplification de dessin, on préfère que les cellules reçoivent le complément logique du signal $R_{i,j}$ et du signal $m_j$, et de même on préfère qu'elles établissent un signal représentant le complément de $R_{i,j+1}$. Par ailleurs, la cellule $CA_{i,j}$ établit un bit $d_{i,j}$ et son complément $d^*_{i,j}$, le bloc OMj utilisant de préférence ces deux signaux complémentaires comme on va maintenant le voir.

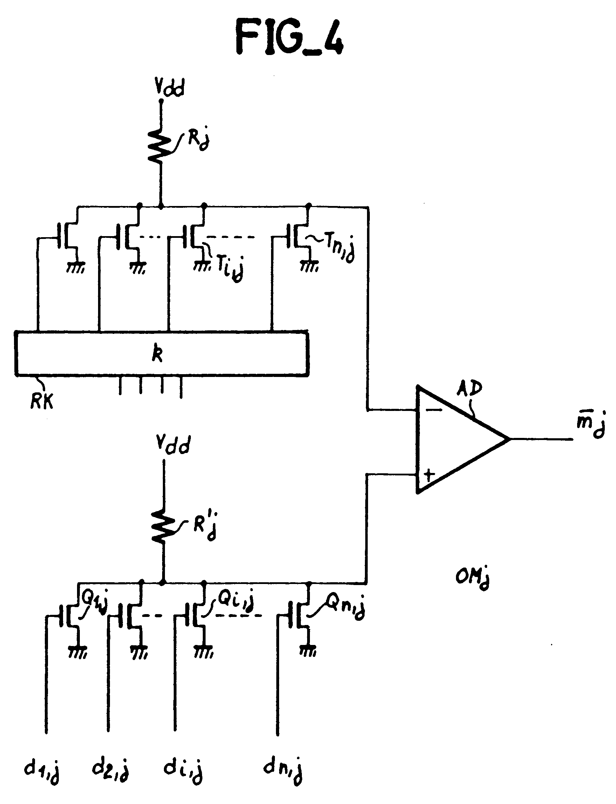

La figure 4 représente une possiblité de réalisation du bloc OMj.

Le bloc comprend deux ensembles de transistors.

Le premier ensemble comprend n transistors $T_{i,j}$ en parallèle (pour le bloc OMj). Ces transistors sont alimentés en courant à travers une résistance Rj ou un transistor à caractéristique résistive, et leurs grilles sont commandées individuellement par les sorties d'un registre RK qui définit le nombre k de la manière suivante: le registre possède n sorties dont k sont à l'état logique 1 et n-k à l'état 0. Le registre est programmable si on le désire.

Le deuxième ensemble comprend n transistors $Q_{i,j}$ en parallèle. Ces transistors sont alimentés en courant à travers une résistance R'j et leurs grilles sont commandées individuellement par les bits modifiés $d_{i,j}$ issus du circuit CAj.

Le point de jonction entre la résistance Rj et les drains des transistors $T_{i,j}$ est relié à une première entrée d'un amplificateur différentiel AD. Le point de jonction entre la résistance R'j et les drains des transistors $Q_{i,j}$ est relié à l'autre entrée de cet amplificateur.

La sortie de cet amplificateur fournit le signal $m_j$ ou son complément selon les polarités choisies pour les entrées de l'amplificateur.

Dans le cas d'un filtre médian ou $k = (n+1)/2$, on n'a pas spécialement besoin du registre RK car les grilles des transistors $T_{i,j}$ peuvent recevoir tout simplement les compléments $d^*_{i,j}$ des signaux $d_{i,j}$.

Ce circuit de la figure 4 repose sur la possibilité de réaliser sur un circuit intégré 2n transistors ayant des caractéristiques identiques notamment en ce qui concerne leur résistance interne dans l'état passant. En effet, l'amplificateur AD va basculer dans un sens ou dans l'autre selon les potentiels présents à ses entrées; si les transistors sont identiques, le basculement sera directement le résultat de la comparaison entre les nombres de transistors rendus conducteurs dans les deux ensembles, c'est-à-dire de la comparaison entre le nombre de bits $d_{i,j}$ à 0 et le nombre k programmé dans le registre.

On pourrait envisager que le registre RK fournisse le nombre k sous forme binaire pondérée, mais alors il faut prévoir aussi que les transistors $T_{i,j}$ aient des dimensions relatives pondérées de la même manière et surtout que leurs résistances internes soient pondérées de la même manière.

**Revendications**

1. Procédé de filtrage numérique pour déterminer quelle est la valeur à la $k^{ième}$ position d'une suite ordonnée, croissante ou décroissante, de n valeurs numériques appliquées à l'entrée d'un filtre sous forme de signaux logiques binaires, consistant à recevoir et stocker les n valeurs numériques et à examiner successivement les bits des valeurs numériques par poids décroissants, caractérisé en ce qu'il comprend les étapes suivantes :
   - examiner l'ensemble des bits de poids le plus élevé des n valeurs numériques, tester si le nombre de bits à "zéro" est ou n'est pas supérieur ou égal à k, et fournir un signal de sortie ayant un premier état dans l'affirmative et un deuxième état dans la négative ;
   - établir des valeurs numériques modifiées selon le principe suivant :
   a) pour le premier état du signal de sortie, on donne la valeur logique "un" à tous les bits de poids moins élevé de toutes les valeurs numériques ayant un bit "un" comme bit de poids le plus élevé, et on conserve les bits des autres valeurs numériques,
   b) pour le deuxième état du signal de sortie, on donne la valeur logique "zéro" à tous les bits de poids moins élevé de toutes les valeurs numériques ayant un bit "zéro" comme bit de poids le plus élevé ; et on conserve les bits des autres valeurs numériques; et
   - recommencer l'examen et le test de bits, et l'établissement de valeurs numériques modifiées, en

6

prenant comme poids le plus élevé le poids immédiatement inférieur, et en prenant comme bits à tester les bits des valeurs modifiées, avant ce poids immédiatement inférieur, et ainsi de suite jusqu'au poids le moins élevé

- transmettre l'ensemble desdits signaux de sortie en taut que sortie du filtre numérique.

2. Circuit de filtrage numérique de rang k pour déterminer quelle est la valeur à la $k^{ième}$ position d'une suite ordonnée, croissante ou décroisssante, de n valeurs numériques appliquées à l'entrée du filtre sous forme de signaux logiques binaires de p bits chacune, comprenant

- un registre (REG) pour recevoir et stocker les n valeurs numériques de p bits, caractérisé en ce qu'il comporte :
- pour chaque poids binaire j des valeurs numériques, j croissant de 1 à p pour les poids successifs décroissants, un circuit logique (CAj) pour établir un bit modifié $d_{i,j}$ à partir du bit $b_{i,j}$ de poids j de chaque valeur numérique en fonction de signaux de test, la valeur du bit $d_{i,j}$ étant soit 0, soit 1, soit $b_{i,j}$
- pour chaque poids binaire j des valeurs numériques, un circuit respectif d'élaboration des signaux de test destinés au circuit d'établissement de bits modifiés de l'étage suivant de poids j + 1, ce circuit comprenant :
  . un premier circuit (OMj) recevant les bits modifiés $d_{i,j}$ et fournissant un signal de sortie $(m_j)$ ayant un premier état ou un deuxième état selon que le nombre de bits modifiés $d_{i,j}$ égaux à 0 est ou n'est pas supérieur ou égal à k,
  . et un deuxième circuit (CBj) recevant ce signal de sortie $(m_j)$, les signaux de test appliqués au circuit d'établissement de bits modifiés, et les bits $d_{i,j}$ du poids binaire j des valeurs numériques, ce deuxième circuit fournissant les signaux de test correspondant au poids j + 1, les signaux de sortie $(m_j)$ des premiers circuits constituant les sorties du filtre de rang k.

3. Circuit de filtrage numérique selon la revendication 2, caractérisé en ce que les signaux de test sont au nombre de deux, $S_{i,j}$ et $R_{i,j}$ pour chaque poids j et pour chaque valeur numérique i, ces signaux étant définis par la fonction récurrente suivante :

$$S_{i,j+1} = S_{i,j} + m_j^*.d_{i,j}$$
$$R_{i,j+1} = R_{i,j} + m_j.d^*_{i,j}$$

avec

$$S_{i,1} = R_{i,1} = 0$$

l'astérisque * désignant le complément logique d'une valeur binaire.

4. Circuit de filtrage numérique selon l'une des revendications 2 et 3, caractérisé en ce que le premier circuit (OMj) comprend un premier ensemble de n transistors $(T_{i,j})$ en parallèle, alimentés en courant à travers une résistance (Rj), leurs grilles étant commandées par un registre (RK) ayant n sorties dont k sont à l'état logique 1 et n-k à l'état logique 0, et un deuxième ensemble de transistors $(Q_{i,j})$ en parallèle, alimentées en courant à travers une résistance R'j et ayant leurs grilles commandées individuellement par les bits modifiés $d_{i,j}$ issus du circuit d'établissement de bits modifiées de poids j, le premier circuit comprenant encore un amplificateur différentiel dont une entrée est reliée aux drains des transistors du premier ensemble et une autre entrée est reliée aux drains des transistors du deuxième ensemble.

5. Circuit de filtrage numérique selon l'une des revendications 2 et 3, caractérisé en ce que le premier circuit (OMj) comprend un premier ensemble de n transistors $(T_{i,j})$ en parallèle, alimentés en courant à travers une résistance (Rj), leurs grilles étant commandées individuellement par les compléments $d^*_{i,j}$ des bits modifiés $d_{i,j}$ issus du circuit d'établissement de bits modifiés de poids j, et un deuxième ensemble de transistors $(Q_{i,j})$ en parallèle, alimentés en courant à travers une résistance R'j et ayant leurs grilles commandées individuellement par les bits modifiés $d_{i,j}$, le premier circuit comprenant encore un amplificateur différentiel dont une entrée est reliée aux drains des transistors du premier ensemble et une autre entrée est reliée aux drains des transistors du deuxième ensemble.

**Claims**

1. A digital filtering method for determining the value at the $k^{th}$ position of an increasing or decreasing ordered sequence of n digital values applied to the input of a filter in the form of binary logic signals, consisting in receiving and storing said n digital values and successively examining the bits of the digital values by decreasing weights, characterized in that it comprises the following steps:

- examining all the highest weight bits of the n digital values, testing whether the number of bits at "zero" is or is not greater than or equal to k, and providing an output signal having a first state if yes and a second state if not;
- establishing digital values modified according to the following rule:

  a) for the first state of said output signal, the logic value "one" is given to all the lowest weight bits of the digital values having "one" as the highest weight bit, and the bits of the other digital values are maintained;

  b) for the second state of said output signal, the logic value "zero" is given to all the lowest weight bits of the digital values having "zero" as the highest weight bit; and the bits of the other digital values are maintained;
- resuming the examination and the bit testing, and establishing modified digital values, selecting as highest weight the weight immediately lower, and selecting as bits to be tested the bits of the modified values, having this immediately lower weight, and so on until the lowest weight bit; and
- transmitting the output signals as the output of the digital filter.

2. A digital filtering circuit of rank k for determining the value at the $k^{th}$ position of an increasing or decreasing ordered sequence of n digital values applied to the input of the filter in the form of binary logic signals of p bits each, comprising a register (REG) for receiving and storing the n digital values of p bits, characterized in that it comprises:

- for each binary weight j of the digital values, j increasing from 1 to p for the successive decreasing weights, a logic circuit (CAj) for establishing a modified bit $d_{i,j}$ from the bit $b_{i,j}$ of weight j of each digital value as a function of test signals, the value of bit $d_{i,j}$ being either 0, 1 or $b_{i,j}$;
- for each binary weight j of the digital values, a respective circuit for generating the test signals for the modified bits establishing circuit of the next stage of weight $j+1$, this circuit comprising:

  . a first circuit (OMj) receiving the modified bits $d_{i,j}$ and providing an output signal (mj) having a first state or a second state depending on whether the number of modified bits $d_{i,j}$ equal to 0 is or is not greater than or equal to k,

  . and a second circuit (CBj) receiving said output signal (mj), the test signals applied to said modified bits establishing circuit, and said bits $d_{i,j}$ of binary weight j of the digital values, this second circuit providing the test signals corresponding to weight $j+1$,

  said output signals (mj) of the first circuits constituting the outputs of the filter of rank k.

3. A digital filtering circuit according to claim 2, characterized in that the test signals are in a number of two, $S_{i,j}$ and $R_{i,j}$ for each weight j and for each digital value i, said signals being defined by the following recurrent function:

$$S_{i,j+1} = S_{i,j} + mj^* . d_{i,j}$$
$$R_{i,j+1} = R_{i,j} + m_j . d^*_{i,j}$$

with

$$S_{i,1} = R_{i,1} = 0$$

asterisk * designing the logical complement of a binary value.

4. A digital filtering circuit according to claim 1 or 2, characterized in that the first circuit (OMj) comprises a first assembly of n parallel transistors ($T_{i,j}$), supplied with a current through a resistor (Rj), their gates being controlled by a register (RK) with n outputs, k of which are at logic state 1 and n-k of which at logic state 0, and a second assembly of parallel transistors ($Q_{i,j}$) supplied with a current through a resistor R'j and having their gates individually controlled by the modified bits $d_{i,j}$ generated by the modified bits establishing circuit of weight j, the first circuit further comprising a differential amplifier, an input of which is connected to the drains of the transistors of the first transistor assembly and another input of which is connected to the drains of the transistors of the second assembly.

**5.** A digital filtering circuit according to claim 2 or 3, characterized in that the first circuit (OMj) comprises a first assembly of n parallel transistors ($T_{i,j}$), supplied with a current through a resistor (Rj), their gates being individually controlled by the complements $d^*_{i,j}$ of the modified bits $d_{i,j}$ generated by the modified bits establishing circuit of weight j, and a second assembly of parallel transistors ($Q_{i,j}$), supplied with a current through a resistor R'j and having their gates individually controlled by the modified bits $d_{i,j}$, the first circuit further comprising a differential amplifier, an input of which is connected to the drains of the transistors of the first assembly and the other input of which is connected to the drains of the transistor of the second assembly.

**Patentansprüche**

**1.** Numerisches Filterverfahren zum Bestimmen, welcher Wert in einer geordneten auf- oder absteigenden Folge von n numerischen Werten, die am Eingang eines Filters als logische Binärsignale anstehen, an k-ter Stelle steht, wobei die n numerischen Werte empfangen und gespeichert und anschließend die Bits der numerischen Werte nacheinander mit absteigendem Stellenwert geprüft werden, gekennzeichnet durch folgende Schritte:

- Prüfen der Bits der n numerischen Werte mit dem höchsten Stellenwert, Ermitteln, ob die Anzahl der "Null"-Bits größer oder kleiner bzw. gleich k ist, und Abgeben eines Ausgangssignales, welches einen ersten Zustand im Falle des Zutreffens und einen zweiten Zustand im Falle des Nichtzutreffens aufweist;
- Bilden von numerischen Werten, die nach folgendem Prinzip modifiziert sind:
  a) für den ersten Zustand des Ausgangssignales wird allen Bits der digitalen Werte mit dem Bit "Eins" auf dem höchsten Stellenwert auf den niedrigeren Stellenwerten der logische Wert "Eins" gegeben, und die Bits der übrigen numerischen Werte werden beibehalten,
  b) für den zweiten Zustand des Ausgangssignales wird allen Bits der digitalen Werte mit dem Bit "Null" auf dem höchsten Stellenwert auf den niedrigeren Stellenwerten der logische Wert "Null" gegeben, und die Bits der übrigen numerischen Werte werden beibehalten; und
- erneutes Prüfen und Ermitteln der Bits sowie Bilden von modifizierten numerischen Werten, wobei als neuer höchster Stellenwert der unmittelbar niedrigere Stellenwert gewählt wird und als zu testende Bits die Bits der modifizierten Werte gewählt werden, die den unmittelbar niedrigeren Stellenwert aufweisen, und so fort bis zu dem Bit mit dem niedrigsten Stellenwert;
- Übermitteln des Ensembles dieser Ausgangssignale als Ausgangssignale des numerischen Filters.

**2.** Numerische Filterschaltung mit dem Rang k zum Bestimmen, welcher Wert an der k-ten Stelle in einer auf- oder absteigenden Folge von n numerischen Werten liegt, die am Eingang des Filters jeweils als logische binäre Signale mit p Bits anstehen, mit einem Speicher (REG) zum Empfangen und Speichern der n numerischen Werte mit p Bits, gekennzeichnet durch folgende Merkmale:

- je eine logische Schaltung für jeden binären Stellenwert j der numerischen Werte, wobei j von 1 bis p für aufeinanderfolgende niedriger werdende Stellenwerte ansteigt, um ein modifiziertes Bit $d_{i,j}$ ab dem Bit $b_{i,j}$ für jeden numerischen Wert als Funktion des Testsignales zu bilden, wobei der Wert des Bits $d_{i,j}$ entweder 0, 1 oder $b_{i,j}$ ist,
- je eine Schaltung für jeden Stellenwert j der numerischen Werte zum Erzeugen der Testsignale, die für die Schaltung zum Bilden der modifizierten Bits ab dem Stellenwert j + 1 bestimmt sind, wobei diese Schaltung aufweist:
  . eine erste Schaltung (OMj), die die modifizierten Bits $d_{i,j}$ empfängt und ein Ausgangssignal (mj) abgibt, welches einen ersten und einen zweiten Zustand aufweist, je nachdem, ob die Anzahl der modifizierten Bits mit dem Wert "Null" größer oder kleiner bzw. gleich k ist,
  . eine zweite Schaltung (CBj), die dieses Ausgangssignal ($m_j$), die an die Schaltung zum Bilden der modifizierten Bits gelieferten Testsignale und die Bits $d_{i,j}$ mit dem binären Stellenwert j der numerischen Werte empfängt, wobei diese zweite Schaltung die den Stellenwerten j + 1 zugeordneten Testsignale abgibt; wobei
  die Ausgangssignale ($m_j$) der ersten Schaltungen die Ausgangssignale des Filters mit dem Rang k bilden.

**3.** Numerische Filterschaltung nach Anspruch 2, dadurch gekennzeichnet, daß zwei Testsignale $S_{i,j}$ und $R_{i,j}$ für jeden Stellenwert j und jeden numerischen Wert i vorgesehen sind, wobei diese Signale durch die folgende Rekursivfunktion definiert sind:

$$S_{i,j+1} = S_{i,j} + m_j^* \cdot d_{i,j}$$
$$R_{i,j+1} = R_{i,j} + m_j \cdot d^*_{i,j}$$

mit

$$S_{i,1} = R_{i,1} = 0$$

und wobei der Stern$^*$ das logische Komplement eines binären Wertes kennzeichnet.

**4.** Numerische Filterschaltung nach einem der Ansprüche 2 und 3, dadurch gekennzeichnet, daß die erste Schaltung (OMj) eine erste Anordnung von n parallelen Transistoren ($T_{i,j}$) aufweist, die über einen Widerstand ($R_j$) mit Strom versorgt und deren Gitter von einem Register (RK) mit n Ausgängen angesteuert werden, wobei k Ausgänge den logischen Zustand 1 und n-k den logischen Zustand 0 aufweisen, und ferner eine zweite Anordnung von parallelen Transistoren ($Q_{i,j}$) aufweist, die über einen Widerstand $R'_j$ mit Strom versorgt und deren Gitter individuell durch die modifizierten Bits $d_{i,j}$ angesteuert werden, die von der Schaltung zum Bilden der modifizierten Bits mit dem Stellenwert j abgegeben werden, wobei die erste Schaltung noch einen Differenzverstärker aufweist, dessen einer Eingang mit den Drain-Elektroden der ersten Transistoranordnung und dessen zweiter Eingang mit den Drain-Elektroden der zweiten Transistoranordnung verbunden sind.

**5.** Numerische Filterschaltung nach einem der Ansprüche 2 und 3, dadurch gekennzeichnet, daß die erste Schaltung (OMj) eine erste Anordnung von n parallelen Transistoren ($T_{i,j}$) aufweist, die über einen Widerstand ($R_j$) mit Strom versorgt und deren Gitter individuell durch die Komplemente $d^*_{i,j}$ der modifizierten Bits angesteuert werden, die von der Schaltung zum Bilden der modifizierten Bits mit dem Stellenwert j abgegeben werden, und ferner eine zweite Anordnung von parallelen Transistoren ($Q_{i,j}$) aufweist, die über einen Widerstand $R'_j$ mit Strom versorgt und deren Gitter individuell durch die modifizierten Bits $d_{i,j}$ angesteuert werden, wobei die erste Schaltung noch einen Differenzverstärker aufweist, dessen einer Eingang mit den Drain-Elektroden der ersten Transistoranordnung und dessen zweiter Eingang mit den Drain-Elektroden der zweiten Transistoranordnung verbunden sind.

FIG_1

# FIG_2

# FIG_3

# FIG_4